(19) Europäisches Patentamt
European Patent Office
Office européen des brevets

(11) **EP 1 021 330 B1**

(12) **EUROPÄISCHE PATENTSCHRIFT**

(45) Veröffentlichungstag und Bekanntmachung des Hinweises auf die Patenterteilung:
**17.07.2002 Patentblatt 2002/29**

(21) Anmeldenummer: **98961095.1**

(22) Anmeldetag: **30.09.1998**

(51) Int Cl.⁷: **B60T 13/72**, H01F 7/18

(86) Internationale Anmeldenummer:
**PCT/EP98/06221**

(87) Internationale Veröffentlichungsnummer:
**WO 99/17970 (15.04.1999 Gazette 1999/15)**

(54) **ELEKTRONISCH STEUERBARER BREMSKRAFTVERSTÄRKER**

ELECTRONICALLY CONTROLLABLE BRAKE BOOSTER

SERVOFREIN A COMMANDE ELECTRONIQUE

(84) Benannte Vertragsstaaten:
**DE ES FR GB IT**

(30) Priorität: **06.10.1997 DE 19744052**

(43) Veröffentlichungstag der Anmeldung:
**26.07.2000 Patentblatt 2000/30**

(73) Patentinhaber: **LUCAS INDUSTRIES PUBLIC LIMITED COMPANY**
**Solihull B90 4LA (GB)**

(72) Erfinder:
• **LINDEN, Christoph**
  **D-56179 Vallendar (DE)**
• **ZEUNER, Lothar**
  **D-57518 Steineroth (DE)**

(74) Vertreter: **Schmidt, Steffen J., Dipl.-Ing. et al**
**Wuesthoff & Wuesthoff,**
**Patent- und Rechtsanwälte,**
**Schweigerstrasse 2**
**81541 München (DE)**

(56) Entgegenhaltungen:
**DE-A- 19 527 493       DE-A- 19 612 952**
**DE-A- 19 707 960**

**Beschreibung**

Die vorliegende Erfindung betrifft einen elektronisch steuerbaren Bremskraftverstärker. Insbesondere betrifft die Erfindung einen elektronisch steuerbaren Bremskraftverstärker mit einer Unterdruckkammer und einer Druckkammer, die durch eine bewegliche Wand voneinander getrennt sind, einer Steuerventilanordnung, die mittels einer elektromagnetischen Betätigungseinrichtung betätigbar ist, und durch die eine Druckdifferenz zwischen der Druck- und der Unterdruckkammer einstellbar ist, wobei die Steuerventilanordnung in Abhängigkeit von einem durch die elektromagnetischen Betätigungseinrichtung fließenden Strom eine Haltestellung, in der der Strom in einem Bereich zwischen einem höheren Wert und einem niedrigeren Wert liegt, ohne daß die Steuerventilanordnung die Haltestellung verläßt, eine erste Druckänderungsstellung, in der der Strom größer als der höhere Wert ist und eine zweite Druckänderungsstellung, in der der Strom niedriger als der niedrige Wert ist, einnimmt.

Aus der DE 195 27 493 A1 ist eine elektromagnetische Betätigungseinrichtung bekannt, die eine mit einem Steuerstrom beaufschlagbare Magnetspule und einen der Magnetspule zugeordneten Anker aufweist, der dazu eingerichtet ist, Bewegungen auszuführen, die von einem durch die Magnetspule fließenden Steuerstrom und einer den Anker in entgegengesetzte Richtungen vorspannenden Federanordnung abhängig sind.

Dabei ist eine Haltestellung als Stellgröße definiert, die der Anker bei einem Haltestrom durch die Magnetspule einnimmt. Dieser durch die Magnetspule fließende Haltestrom ist auf einen höheren Wert oder auf einen niedrigeren Wert veränderbar, ohne daß der Anker die Haltestellung verläßt.

Außerdem sind der höhere sowie der niedrigere Stromwert so bemessen, daß Störungseinflüsse auf die den Anker betätigenden Magnet- und Federkräfte den Anker nicht in eine von der Haltestellung unterschiedliche betätigte Stellung bringen.

Dazu wird der höhere Stromwert in der Weise bestimmt, daß eine mit der Position des Ankers in der Haltestellung in Beziehung stehende Größe bestimmt wird; der Steuerstrom wird um einen vorbestimmten Stromschritt solange schrittweise erhöht und an die Magnetspule der elektromagnetischen Betätigungseinrichtung als Stellgröße ausgegeben, bis sich die mit der Position des Ankers in der Haltestellung in Beziehung stehende Größe um einen vorherbestimmten Wert in Richtung der zweiten betätigten Stellung ändert.

Der niedrigere Stromwert wird in der Weise bestimmt, daß eine mit der Position des Ankers in der Haltestellung in Beziehung stehende Größe bestimmt wird; der Steuerstrom wird um einen vorbestimmten Stromschritt schrittweise solange verringert und an die Magnetspule der elektromagnetischen Betätigungseinrichtung als Stellgröße ausgegeben, bis sich die mit der Position des Ankers in der Haltestellung in Beziehung stehende Größe um einen vorherbestimmten Wert in Richtung der ersten betätigten Stellung ändert.

Außerdem ist aus diesem Dokument bekannt, daß die Steuerventilanordnung sicher in die Haltestellung bringbar ist, wenn für den Haltestrom der arithmetische Mittelwert der Ströme gewählt wird.

Allerdings ist das in der DE 195 27 493 A1 behandelte "Lernen der Arbeitspunkte" darauf beschränkt, daß die maßgebenden Ströme für die untere Grenze und für die obere Grenze bei jedem Fahrtantritt beim Einschalten der Zündung oder während der Fahrt in regelmäßigen Zeitabständen gelernt und abgespeichert werden. Bei einer Ansteuerung der Steuerventilanordnung werden die auf diese Weise gelernten Ströme zur Vorgabe der ersten Stellgröße verwendet, um ein ausreichendes Regelverhalten zu erzielen.

Allerdings wird dabei die an der beweglichen Wand des Bremskraftverstärkers wirkende Druckdifferenz, für die je nach Ansteuerwunsch unterschiedliche Werte eingestellt werden, quantitativ nicht berücksichtigt.

Die an der beweglichen Wand eingestellte Druckdifferenz wirkt nämlich unmittelbar auch auf den Ventilkörper, den Ventilsitz sowie das Ventilelement, was auch zu einer Verschiebung der Ströme für die untere Grenze und für die obere Grenze führt.

Die Erfindung behandelt also die Problematik, die sich durch die Verlagerung der oberen und unteren Stromwerte ergibt, welche notwendig sind, um die Steuerventilanordnung in ihrer Haltestellung zu halten.

Die Aufgabe der vorliegenden Erfindung besteht darin, diesen Nachteil zu beheben, so daß das Regelverhalten weiter verbessert ist.

Die Erfindung macht sich dabei insbesondere die Erkenntnis zunutze, daß die Druckschwankung bzw. Druckdifferenz zwischen den beiden Kammern eine erhebliche Einflußgröße auf das Verhalten der Steuerventilanordnung im Betrieb des Bremskraftverstärker darstellt. Das Verhalten der Steuerventilanordnung wird jedoch auch von der tatsächlichen Fläche der beweglichen Wand beeinflußt, da die auf die Steuerventilanordnung wirkende Kraft das Produkt der Druckdifferenz an der beweglichen Wand und der Fläche der beweglichen Wand ist. Da die Fläche der beweglichen Wand jedoch produktionsbedingten Schwankungen unterliegt oder auch Baureihen-abhängig ist, kann insbesondere für eine schnelle Regelung nicht mit allzu ungenauen Näherungswerten gearbeitet werden.

Zur Lösung schlägt die Erfindung nun vor, eine für die Druckdifferenz zwischen der Unterdruckkammer und Druckkammer charakteristische Größe bei zwei unterschiedlichen Druckpegeln in der Druckkammer zu erfassen, wobei sich die Steuerventilanordnung jeweils in der Haltestellung befindet und, ausgehend von der Haltestellung, der Strom durch die elektromagnetische Betätigungseinrichtung jeweils so verändert wird, daß die Steuerventilanordnung in die erste Druckänderungsstellung bzw in die zweite Druckänderungsstellung gelangt, und wobei die Stromwerte für den Übergang von der Haltestellung in die erste Druckänderungsstellung bei einem hohem Druckpegel, für den Übergang von der Haltestellung in die erste Druckänderungsstellung bei einem niedrigem Druckpegel, und/oder für den Übergang von der Haltestellung in die zweite Druckänderungsstellung bei einem hohem Druckpegel, und für den Übergang von der Haltestellung in die zweite Druckänderungsstellung bei niedrigem Druckpegel ausgewertet werden, um für den Betrieb des Bremskraftverstärkers eine Kennlinie zu ermitteln, gemäß der die Stromwerte für die obere und untere Grenze der Haltestellung der Steuerventilanordnung bei unterschiedlichen Druckpegeln verändert werden.

In einer Weiterentwicklung der Erfindung kann auch bei mehr als zwei Druckpegeln die Bestimmung des Stromes für die obere und untere Grenze für die Haltestellung der Steuerventilanordnung erfolgen. In diesem Fall wird zwischen den ermittelten Punkten nicht nur linear interpoliert. Vielmehr können in Abhängigkeit von der Anzahl der Stützpunkte noch genauere Anpassungen der Stromwerte zwischen dem minimalen und dem maximalen Druckpegel vorgenommen werden.

Diese zusätzlichen Stützstellen im Druckpegelverlauf können deshalb wünschenswert sein, weil durch Störeinflüsse, wie beispielsweise durch Reibungsverluste bei der Bewegung des Ankers und der mit ihm gekoppelten Ventilkomponenten, durch Toleranzen der ersten und zweiten Federanordnung, durch Temperaturschwankungen oder durch Schwankungen externer Reaktionskräfte, wozu insbesondere Schwankungen des Druckkraftanteils in der Unterdruckkammer zählen, nennenswerten Nichtlinearitäten auftreten können.

In einer bevorzugten Ausführungsform wird durch die Druckdifferenz zwischen der Druck- und der Unterdruckkammer eine axiale Verschiebung der beweglichen Wand bewirkt, bei der ein Gehäuse der Steuerventilanordnung mitgenommen wird.

In dieser konkreten Ausgestaltung ist in dem Gehäuse die elektromagnetische Betätigungseinrichtung angeordnet, die eine Spule und einen Anker aufweist, wobei der Anker relativ zu dem Gehäuse mit Unterstützung einer ersten Federanordung in axialer Richtung bewegbar ist.

Im Inneren des Gehäuses ist eine Ventilanordnung ausgebildet ist, die die Unterdruckkammer mit der Druckkammer verbindet oder trennt, wobei durch eine zweite Federanordnung ein Ventilkörper der Ventilanordnung in Richtung auf einen Ventilsitz bzw. ein Ventilelement der Ventilanordnung vorgespannt ist.

Als für die Druckdifferenz charakteristische Größe wird in einer bevorzugten Ausführungsform der Erfindung die in einem dem Bremskraftverstärker nachgeschalteten Hauptbremszylinder erzeugte Hydraulik- oder Pneumatikdruck ausgewertet.

Gemäß einer besonders bevorzugten Ausführungsform ist die erste Druckänderungsstellung eine Druckaufbaustellung und die zweite Druckänderungsstellung eine Druckabbaustellung.

Zur weiteren Erläuterung von Merkmalen, Abwandlungsmöglichkeiten und Eigenschaften der Erfindung dient die nachfolgende Beschreibung, in der auf die beigefügten Zeichnungen Bezug genommen ist.

Fig. 1    zeigt einen Schnitt durch eine schematisch dargestellte Steuerventilanordnung eines elektronisch gesteuerten Bremskraftverstärkers in einem unbetätigten Zustand

Fig. 2    zeigt einen Schnitt durch die schematisch dargestellte Steuerventilanordnung eines elektronisch gesteuerten Bremskraftverstärkers gemäß Fig. 1 in einem betätigten Zustand.

Fig. 3    zeigt ein idealisiertes Diagramm zur Erläuterung der Steuerkennlinie der Steuerventilanordnung elektronisch gesteuerten Bremskraftverstärkers gemäß Fig. 1.

Fig. 4    zeigt schematisch den Aufbau eines einfachen geschlossenen Regelkreises zeigt.

Fig. 5    zeigt schematisch ein Flussdiagramm zur Bestimmung der Parameter zur Korrektur der Steuerkennlinie der Steuerventilanordnung elektronisch gesteuerten Bremskraftverstärkers gemäß Fig. 1.

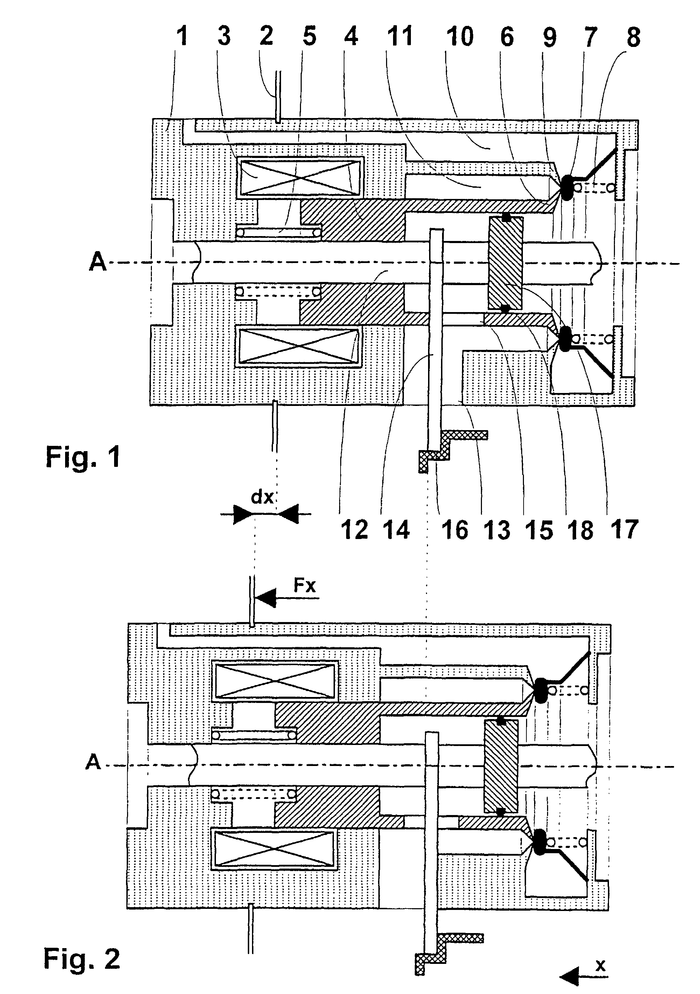

Die in Fig. 1 und 2 schematisch dargestellte Steuerventilanordnung eines elektronisch gesteuerten Bremskraftverstärkers ist im wesentlichen rotationssymetrisch in bezug auf eine Achse A und weist ein Gehäuse 1 auf, das mit einer beweglichen Wand 2 fest verbunden ist. Die bewegliche Wand 2 unterteilt den Bremskraftverstärker (nicht gezeigt) in zwei Kammern, wobei sich auf der linken Seite der beweglichen Wand 2 eine Unterdruckkammer (nicht gezeigt) und auf der rechten Seite der beweglichen Wand 2 eine Druckkammer (nicht gezeigt) befindet. Eine durch eine Druckdifferenz zwischen der Druckund der Unterdruckkammer hervorgerufenene Kraft Fx an der beweglichen Wand 2 bewirkt eine Verschiebung der bewegliche Wand 2 in x-Richtung, wobei das Gehäuse 1 mitgenommen wird.

Eine elektromagnetische Betätigungseinrichtung ist in dem Gehäuse 1 angeordnet und umfaßt eine Spule 3 und einen Anker 4, der relativ zu dem Gehäuse 1 mit Unterstützung einer ersten Feder 5 in x-Richtung bewegbar ist. Im Inneren des Gehäuses 1 ist ein ortsfester ringförmiger Ventilsitz 9 ausgebildet, der einen in die links von der beweglichen Wand 2 angeordnete Unterdruckkammer (nicht gezeigt) mündenden Kanal 10 von einem vom Anker 4 begrenzten ringförmigen Raum 11 trennt, der über eine Aussparung 13 im Gehäuse 1 mit der rechts von der beweglichen Wand 2 angeordneten Druckkammer (nicht gezeigt) in Verbindung steht. An dem rechten Ende des Ankers 4 ist ein konzentrisches Ventilelement 6 ausgebildet. Der Ventilsitz 9 und das Ventilelement 6 wirken mit einem ringförmigen Ventilkörper 7 zusammen. Durch eine zweite Feder 8 ist der Ventilkörper 7 in Richtung auf den Ventilsitz 9 bzw. das Ventilelement 6 vorgespannt.

Zentral zu dem Anker 4 sind ein Kolben 17 und eine mit diesem verbundene Kolbenstange 12 geführt. Der Kolben 17 steht mit einer Betätigungseinrichtung (nicht gezeigt) in Verbindung, die in bekannter Weise zur mechanischen Betätigung des Bremskraftverstärkers (nicht gezeigt) dient. Der Kolben 17 ist über ein ringförmiges Dichtelement 18 gegenüber dem Anker 4 bzw. dem Ventilelement 6 in radialer Richtung abgedichtet. Rechts von dem Dichtelement 18 herrscht ständig Atmosphärendruck.

Der Anker 4 bzw. das Ventilelement 6 weist eine Aussparung 15 auf, an die sich die Aussparung 13 in dem Gehäuse 1 anschließt. Ein Anschlagglied 14 ist zur gemeinsamen axialen Bewegung mit dem Kolben 17 bzw. der Kolbenstange 12 fest verbunden und erstreckt sich radial durch die Aussparungen 15 und 13 nach außen. Bei mechanisch unbetätigtem Bremskraftverstärker nimmt der Kolben 17 bzw. die Kolbenstange 12 die in Fig. 1 und 2 gezeigte Ruhestellung ein, bei der das Anschlagglied 14 an einem von der Stellung des Gehäuses 1 unabhängigen Anschlag 16 anliegt.

Der Anker 4 bzw. das Ventilelement 6 wird von einer ersten Feder 5, die sich an dem Gehäuse 1 abstützt, nach rechts gedrängt. Bei unbetätigter elektromagnetischer Einrichtung gemäß Fig. 1 stützt sich der Anker 4 bzw. das Ventilelement 6 über die Aussparung 15 an dem Anschlagglied 14 ab. Dadurch nimmt der Anker 4 eine bestimmte Position in x-Richtung ein, bei der das Ventilelement 6 an dem Ventilkörper 7 derart anliegt, daß der in die Unterdruckkammer mündende Kanal 10, der mit der Druckkammer in Verbindung stehende Raum 11 und die sich rechts von dem Dichtelement 18 befindende Atmosphäre jeweils gegeneinander abgesperrt sind.

Bei Beaufschlagung der Spule 3 mit Strom wird auf den Anker 4 eine Magnetkraft F3 ausgeübt, die nach links gerichtet ist, und somit der von der ersten Feder 5 ausgeübten Federkraft F5 entgegenwirkt. Dadurch wird das Ventilelement 6 von dem Ventilkörper 7 wegbewegt und es entsteht über den Raum 11 eine Verbindung von der Druckkammer zur Atmosphäre, wobei die Verbindung zu dem der Unterdruckkammer zugeordneten Kanal 10 abgesperrt ist. Da die Unterdruckkammer an eine Vakuumquelle (nicht gezeigt) angeschlossen ist, entsteht an der beweglichen Wand 2 eine Druckdifferenz, die eine Kraft Fx in x-Richtung bewirkt, unter der sich auch das Gehäuse 1 in x-Richtung mitbewegt. Dabei verschiebt sich auch die Aussparung 15 in dem Anker 4 bzw. dem Ventilelement 6 in Bezug auf das Anschlagglied 14 in x-Richtung nach links, so daß der Anker 4 bzw. das Ventilelement 6 keine Abstützung durch das Anschlagglied 14 erfahren.

Bei dem in Fig. 2 dargestellten Betätigungszustand ist die Bestromung der Spule 3 auf eine derartige Stärke eingestellt, daß der Anker 4 eine bestimmte Position einnimmt, in der das Ventilelement 6 wie bei dem in Fig. 1 gezeigten unbetätigten Zustand an dem Ventilkörper 7 anliegt, so daß der Kanal 10, der Raum 11 und die Atmosphäre jeweils gegeneinander abgesperrt sind. Dadurch wird eine an der beweglichen Wand 2 anstehende Druckdifferenz aufrechterhalten, so daß das Gehäuse 1 um den Weg dx aus der Ruhestellung gemäß Fig. 1 verschoben ist. Hierbei handelt es sich um eine sogenannte "Haltestellung".

Wird ausgehend von dieser "Haltestellung" die Bestromung der Spule 3 reduziert, so werden der Anker 4 und das Ventilelement 6 unter Wirkung der von der ersten Feder 5 ausgeübten Federkraft F5 in x-Richtung nach rechts bewegt, wobei der Ventilkörper 7 gegen die Wirkung der von der zweiten Feder 8 ausgeübten Kraft F8 von dem ortsfesten Ventilsitz 9 abgehoben wird. Dies wird dadurch erreicht, daß die zweite Federanordnung 8 schwächer ausgelegt ist als die erste Federanordnung 5. Dadurch entsteht eine Verbindung zwischen dem Kanal 10 und dem Raum 11, wobei die Atmosphäre gegenüber dieser Verbindung abgesperrt ist. Dies führt zu einem Druckausgleichsvorgang zwischen der Druckkammer und der Unterdruckkammer, so daß die an der beweglichen Wand 2 anstehende Druckdifferenz abgebaut wird. Folglich handelt es sich hierbei um eine sogenannte "Abbaustellung".

Eine sogenannte "Aufbaustellung" wird ausgehend von der "Haltestellung" eingestellt, indem die Bestromung der Spule 3 erhöht wird, so daß der Anker 4 und das Ventilelement 6 gegen die Wirkung der ersten Feder 5 in x-Richtung nach links bewegt wird, wobei das Ventilelement 6 von dem Ventilkörper 7 abgehoben wird. Dadurch entsteht eine Verbindung von der Atmosphäre zu dem Raum 11, wobei der Raum 10 gegenüber dieser Verbindung abgesperrt ist, was wie bereits erläutert zu einer Erhöhung der an der beweglichen Wand 2 anstehenden Druckdifferenz führt.

Die auf den Anker 4 wirkende Magnetkraft F3 ist eine Funktion des durch die Spule 3 fließenden Stroms. Durch Variation des durch die Spule 3 fließenden Stroms kann die Position des Ankers 4 in x-Richtung eingestellt werden, so daß durch gezielten zeitlichen Wechsel zwischen Halte-, Abbau- und Aufbaustellung jeder gewünschte Druckverlauf eingestellt werden kann. Die Bestromung der Spule 3 kann durch Strom-, Spannungs- bzw. Pulsweitenmodulationssignale durch eine elektronische Steuereinheit (nicht gezeigt) erfolgen.

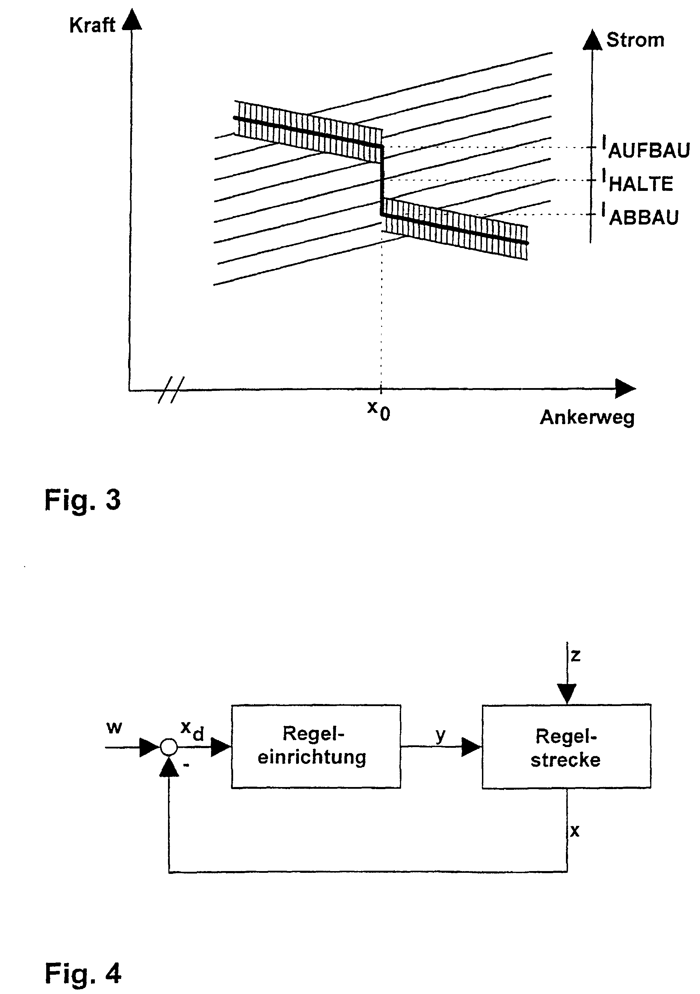

In dem Diagramm gemäß Fig. 3 ist auf der Abszisse der Weg des Ankers 4 in x-Richtung und auf der Ordinate die auf den Anker 4 ausgeübte Kraft aufgetragen, die sich in Abhängigkeit von dem durch die Spule 3 fließenden Strom entsprechend der Stromkurven ergibt. Hierbei handelt es sich um eine idealisierte schematische Darstellung, die sich auf einen Arbeitsbereich bezieht, der üblicherweise derart ausgelegt ist, daß ein proportionaler Zusammenhang zwischen Kraft und Strom besteht. Weiterhin ist die Steuerkennlinie der aus Ventilelement 6, Ventilkörper 7 sowie Ventilsitz 9 gebildeten Steuerventilanordnung eingetragen. Diese Steuerkennlinie weist insgesamt drei Zweige auf. Bei dem senkrechten Zweig ist einer bestimmten Ankerposition x0 ein Strombereich $I_{ABBAU}$ bis $I_{AUFBAU}$ zugeordnet. Die Position x0 entspricht genau der "Haltestellung", bei der das Ventilelement 6 und der Ventilsitz 9 an dem Ventilkörper 7 abdichtend anliegen. Der sich nach links an den senkrechten Zweig anschließende geneigte Zweig gilt für einen Strom größer als $I_{AUFBAU}$ und steht für die "Aufbaustellung", während der von dem senkrechten Zweig nach rechts abgehende geneigte Zweig für einen Strom kleiner als $I_{ABBAU}$ gilt und die "Abbaustellung" charakterisiert.

Bedingt durch Störeinflüsse, die beispielsweise durch Reibungsverluste bei Bewegung des Ankers 4 und der mit ihm gekoppelten Ventilkomponenten 6, 7 oder durch Toleranzen der ersten und zweiten Federanordnung 5, 8 oder durch Temperaturschwankunge oder durch Schwankungen externer Reaktionskräfte, wozu insbesondere Schwankungen des Druckkraftanteils in der Unterdruckkammer zählen, hervorgerufen werden, ist die Steuerkennlinie im Bereich der beiden geneigten Zweige mit einem Streuband behaftet, was zu einer zu einer Verschiebung der Arbeitspunkte $I_{ABBAU}$ und $I_{AUFBAU}$ führt.

Der Betrieb der Steuerventilanordnung erfolgt in einem geschlossenen Regelkreis, wie in Fig. 4 dargestellt ist. Dabei wird eine von der Regelstrecke ausgehende Regelgröße x, beispielsweise die Position des Ankers 4 in x-Richtung, fortlaufend erfaßt und mit einer Führungsgröße w verglichen. Das Ergebnis dieses Vergleichs ist eine Regelabweichung xd, die einer Regeleinrichtung zugeführt wird. Die Stellgröße y, die von der Regeleinrichtung ausgeht, ist der der Spule 3 zugeführte Strom. Bei den Störgrößen z, die von außen auf die Regelstrecke einwirken, handelt es sich vorwiegend um die zuvor erwähnten durch Reibung, Federtoleranzen und Reaktionskräfte verursachten Einflüsse. Anstelle der unmittelbaren Position des Ankers 4 in x-Richtung läßt sich auch eine mit der Position des Ankers 4 in Beziehung stehende Größe als Regelgröße x heranziehen. Dies können im Fall des elektronisch gesteuerten Bremskraftverstärkers beispielsweise der Verstärkerausgangsdruck und/oder die Verstärkerausgangskraft und/oder die an der bewglichen Wand 2 des Verstärkers erzeugte Druckdifferenz und/oder die Fahrzeuggeschwindigkeit und/oder die Fahrzeugverzögerung sein.

Das zur Lösung der Aufgabe entwickelte erfindungsgemäße Verfahren beruht zunächst auf der Erkenntnis, daß der Arbeitspunkt $I_{ABBAU}$ mit zunehmender Druckdifferenz $delta_P$ zunimmt, und daß der Arbeitspunkt $I_{AUFBAU}$ mit zunehmender Druckdifferenz $delta_P$ abnimmt. Dies erklärt sich damit, daß die Druckdifferenz $delta_P$ auf den Ventilkörper 7, den Ventilsitz 9 sowie das Ventilelement 6 eine Kraft ausübt, die der auf den Anker 4 ausgeübten Magnetkraft bei Einstellung der "Abbaustellung" entgegenwirkt, und bei Einstellung der "Aufbaustellung" unterstützend zu der auf den Anker 4 ausgeübten Magnetkraft wirkt.

Selbstverständlicherweise besteht die Alternative, die Steuerventilanordnung auch derart auszugestalten, daß durch die Druckdifferenz $delta_P$ auf den Ventilkörper 7, den Ventilsitz 9 sowie das Ventilelement 6 eine Kraft ausgeübt wird, die bei Einstellung der "Abbaustellung" zu der auf den Anker 4 ausgeübten Magnetkraft unterstützend wirkt, und der auf den Anker 4 ausgeübten Magnetkraft bei Einstellung der "Aufbaustellung" entgegenwirkt. Demzufolge würde der Arbeitspunkt $I_{ABBAU}$ mit zunehmender Druckdifferenz $delta_P$ linear abnehmen, und der Arbeitspunkt $I_{AUFBAU}$ würde mit zunehmender Druckdifferenz $delta_P$ linear zunehmen. Es ergäbe sich also genau ein umgekehrtes aber prinzipiell identisches Verhalten als bei der in Fig. 1 und 2 gezeigten Steuerventilanordnung. Deshalb wird im folgenden nur das Verhalten der in Fig. 1 und 2 gezeigten Steuerventilanordnung näher betrachtet.

Es hat sich herausgestellt, daß, insbesondere bei idealen Verhältnissen, die bei einem (nahezu) konstanten Druckkraftanteil in der Unterdruckkammer gegeben sind, zwischen der Zunahme des Arbeitspunktes $I_{ABBAU}$ bzw. der Abnahme des Arbeitspunktes $I_{AUFBAU}$ und der zunehmenden Druckdifferenz deltap ein (nahezu) linearer Zusammenhang besteht. Daher lassen sich die funktionalen Abhängigkeiten der Ströme $I_{ABBAU}$ und $I_{AUFBAU}$ von der Druckdifferenz $delta_P$ in idealer Annäherung als Geradengleichungen (G1, G2) beschreiben, wobei die Geradengleichungen (G1, G2) jeweils durch den Steigungsparameter $m_{ABBAU}$ bzw. $m_{AUFBAU}$ sowie den Anfangswertparameter $b_{ABBAU}$ bzw. $b_{AUFBAU}$ bestimmt sind.

$$I_{ABBAU} = m_{ABBAU} * delta_P + b_{ABBAU} \qquad (G1)$$

$$I_{AUFBAU} = m_{AUFBAU} * delta_P + b_{AUFBAU} \qquad (G2)$$

Die Erfassung der an der beweglichen Wand 2 wirkenden Druckdifferenz $delta_P$ als Regelgröße x ist aus der DE 44 26 297 A1 bereits bekannt. Insofern können bei Anwendung dieses Meßverfahrens die Ströme $I_{ABBAU}$ bzw. $I_{AUFBAU}$ sich ändernden Druckdifferenzen $delta_P$ über die Geradengleichungen ($g_1$, $g_2$) ständig (fortlaufend) angepasst

werden. Voraussetzung hierfür ist, daß die Parameter $m_{ABBAU}$, $b_{ABBAU}$, $m_{AUFBAU}$ und $b_{AUFBAU}$ vorherbestimmt sind, worauf später noch näher eingegangen wird.

Anstelle der an der beweglichen Wand 2 wirkenden Druckdifferenz $delta_P$ kann aber auch der Verschiebeweg der beweglichen Wand 2 in x-Richtung oder der am Verstärkerausgang bereitgestellte Bremdruck $p_{HBZ}$ herangezogen werden.

Besonders vorteilhaft ist die Heranziehung des am Verstärkerausgang bereitgestellten Bremdrucks $p_{HBZ}$. Die Erzeugung des Bremsdrucks $p_{HBZ}$ erfolgt üblicherweise in einem dem Bremskraftverstärker nachgeschalteten Hauptbremszylinder. Unter Berücksichtigung der wirksamen pneumatischen Arbeitsfläche $A_{BKV}$ der beweglichen Wand 2 des Bremskraftverstärkers und der wirksamen hydraulischen Arbeitsfläche $A_{HBZ}$ des Hauptbremszylinders ergibt sich der Bremsdruck zu

$$p_{HBZ} = ( F_{FAHRER} + delta_P * A_{BKV} ) / A_{HBZ},$$

wobei $F_{FAHRER}$ der vom Fahrer aufgebrachte Kraftanteil zur mechanischen Betätigung des Bremskraftverstärkers ist. Wird der Bremskraftverstärker nur elektrisch betätigt, wenn also vom Fahrer kein Kraftanteil aufgebracht wird ($F_{FAHRER}$ = 0), so ergibt sich der Bremsdruck zu

$$p_{HBZ} = delta_P * A_{BKV} / A_{HBZ}.$$

Da die Arbeitsflächen $A_{BKV}$ und $A_{HBZ}$ konstante in der Regel sich nicht ändernde Systemparameter sind, verhält sich in diesem Sonderfall ($F_{FAHRER}$ = 0) der Bremsdruck $p_{HBZ}$ (nahezu) linear zu der an der beweglichen Wand 2 wirkenden Druckdifferenz $delt_P$. Dadurch lassen sich die Parameter $m_{ABBAU}$, $b_{ABBAU}$, $m_{AUFBAU}$ und $b_{AUFBAU}$ der Geradengleichungen (G1, G2) folgendermaßen vorherbestimmen.

Zunächst wird der Bremsdruck $p_{HBZ}$ auf einen hohen Wert $p_{HOCH}$ (z.B. 50 bar) eingeregelt, woraufhin die Steuerventilanordnung die "Haltestellung" eingenommen hat. Daraufhin wird der Strom $I_{AUFBAU,HOCH}$ ermittelt, der erforderlich ist, um die Steuerventilanordnung in die "Aufbaustellung" zu bringen, wozu der Strom solange schrittweise erhöht wird, bis ein Anstieg des Brems-drucks feststellbar ist ($p_{HBZ} > p_{HOCH}$). Nachdem dies erfolgt ist, wird der Bremsdruck $p_{HBZ}$ wieder auf den zuvor eingestellten hohen Wert $p_{HOCH}$ korrigiert. Jetzt erfolgt die Ermittlung des Stroms $I_{ABBAU,HOCH}$, der erforderlich ist, um die Steuerventilanordnung in die "Abbaustellung" zu bringen, wozu der Strom solange schrittweise erniedrigt wird, bis ein Abfall des Brems-drucks feststellbar ist ($p_{HBZ} < p_{HOCH}$).

Nun wird der Bremsdruck $p_{HBZ}$ auf einen tiefen Wert $p_{TIEF}$ (z.B. 2 bar) eingeregelt und es werden analog wie bei dem Beriebpunkt $p_{HOCH}$ die Ströme $I_{AUFBAU,TIEF}$ und $I_{ABBAU,TIEF}$ ermittelt, die einzustellen sind, damit die Steuerventilanordnung in dem Betriebspunkt $p_{TIEF}$ die "Aufbaustellung" bzw. "Abbaustellung" einnimmt.

Mit den auf diese Weise bestimmten Stromwerten für $I_{AUFBAU,HOCH}$, $I_{ABBAU,HOCH}$, $I_{AUFBAU,TIEF}$ und $I_{ABBAU,TIEF}$ ergeben sich nun die die Geradengleichungen (G1, G2) bestimmenden Parameter $m_{ABBAU}$, $b_{ABBAU}$, $m_{AUFBAU}$ und $b_{AUFBAU}$ im Fall der für die "Abbaustellung" maßgebenden Geradengleichung (G1) zu:

$$m_{ABBAU} = (I_{ABBAU,TIEF} - I_{ABBAU,HOCH}) / (p_{TIEF} - p_{HOCH})$$

$$b_{ABBAU} = I_{ABBAU,HOCH} - (I_{ABBAU,TIEF} - I_{ABBAU,HOCH}) * p_{HOCH} / (p_{TIEF} - p_{HOCH})$$

und im Fall der für die "Aufbaustellung" maßgebenden Geradengleichung (G2) zu:

$$m_{AUFBAU} = (I_{AUFBAU,TIEF} - I_{AUFBAU,HOCH}) / (p_{TIEF} - p_{HOCH})$$

$$b_{AUFBAU} = I_{AUFBAU,HOCH} - (I_{AUFBAU,TIEF} - I_{AUFBAU,HOCH})$$

**EP 1 021 330 B1**

$$* p_{HOCH} / (p_{TIEF} - p_{HOCH})$$

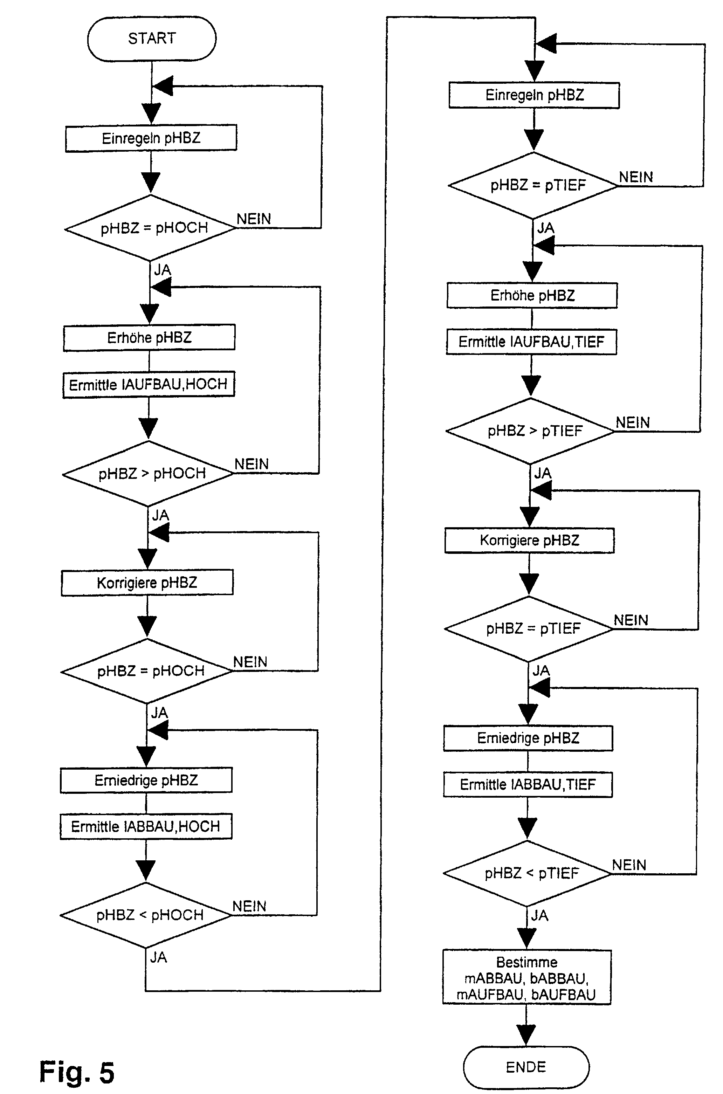

Der zuvor geschilderte Ablauf zur Ermittlung der Ströme $I_{ABBAU,TIEF}$, $I_{ABBAU,HOCH}$, $I_{AUFBAU,TIEF}$ und $I_{AUFBAU,HOCH}$, um die Parameter $m_{ABBAU}$, $b_{ABBAU}$, $m_{AUFBAU}$ und $b_{AUFBAU}$ zu bestimmen, ist in dem in Fig. 5 dargestellten Flußdiagramm wiedergegeben und bedarf eigentlich keiner weiteren Erläuterung.

Es versteht sich von selbst, das anstelle der Einregelung des Bremsdruckes $p_{HBZ}$ über $p_{HOCH}$ bzw. $p_{TIEF}$ auch eine entsprechende Einregelung über die Druckdifferenz delta$_P$ erfolgen könnte. Allerdings besteht bei Einregelung über den Bremsdruckes $p_{HBZ}$ der große Vorteil, daß auch Toleranzen der wirksamen Arbeitsflächen $A_{BKV}$ und $A_{HBZ}$, die beispielsweise fertigungstechnisch bedingt sein können, berücksichtigt und somit ausgeglichen werden.

Da die Größe der wirksamen Arbeitsflächen $A_{BKV}$ und $A_{HBZ}$ je nach Fahrzeugbremsanlage unterschiedlich ausgelegt wird, besteht bei Einregelung über den Bremsdruck $p_{HBZ}$ weiterhin der große Vorteil, daß auch dieser Unterschied berücksichtigt und ausgeglichen wird, wodurch das erfindungsgemäße Verfahren für unterschiedlich ausgelegte Fahrzeugbremsanlagen einheitlich anwendbar ist. Praktisch betrachtet wird das erfindungsgemäße Verfahren auf dem Prozeßrechner der (hier nicht gezeigten) elektronischen Steuereinheit implementiert werden, so daß sich eine Standardisierung im Bereich der elektronischen Steuereinheit ergibt, wodurch Kosten und Aufwand reduziert werden.

Die Durchführung des erfindungsgemäßen Verfahrens zur Parametrisierung der Korrekturgeraden (G1, G2) kann bei jedem Fahrtantritt beim Einschalten der Zündung oder während der Fahrt in regelmäßigen Zeitabständen erfolgen. Es ist aber besonders sinnvoll, daß Verfahren beim sogenannten "End-of-Line"-Test durchzuführen, also wenn die Fahrzeugbremsanlage einer abschließenden Funktionsüberprüfung unterzogen wird, so daß Fehler im elektronisch gesteuerten Bremskraftverstärker vorzeitig erkannt werden können. So kann zum Beispiel auf einen Fehler zurückgeschlossen werden, wenn sich beim Ablauf nach Fig. 5 der Bremsdruck $p_{HBZ}$ nicht innerhalb einer vorbestimmten Zeitspanne einregeln bzw. korrigieren läßt. Für den Fall daß kein Fehler erkannt wird, liegt dann aber schon vor der ersten Inbetriebnahme durch den Endverbraucher (Fahrer) eine Parametrisierung der Korrekturgeraden (G1, G2) vor.

**Patentansprüche**

1. Elektronisch steuerbarer Bremskraftverstärker mit

   - einer Unterdruckkammer und einer Druckkammer, die durch eine bewegliche Wand voneinander getrennt sind,
   - einer Steuerventilanordnung (6, 7, 9), die mittels einer elektromagnetischen Betätigungseinrichtung (3, 4) betätigbar ist, und durch die eine Druckdifferenz zwischen der Druckund der Unterdruckkammer einstellbar ist, wobei
   - die Steuerventilanordnung (6, 7, 9) in Abhängigkeit von einem durch die elektromagnetischen Betätigungseinrichtung (3, 4) fließenden Strom (I)

     -- eine Haltestellung, in der der Strom in einem Bereich zwischen einem höheren Wert und einem niedrigeren Wert liegt, ohne daß die Steuerventilanordnung die Haltestellung verläßt,
     -- eine erste Druckänderungsstellung, in der der Strom größer als der höhere Wert ist und
     -- eine zweite Druckänderungsstellung, in der der Strom niedriger als der niedrige Wert ist, einnimmt,

   **dadurch gekennzeichnet, daß**

   - eine für die Druckdifferenz zwischen der Unterdruckkammer und der Druckkammer charakteristische Größe bei zwei unterschiedlichen Druckpegeln in der Druckkammer erfaßt wird,

     -- wobei sich die Steuerventilanordnung (6, 7, 9) jeweils in der Haltestellung befindet und ausgehend von der Haltestellung jeweils der Strom durch die elektromagnetische Betätigungseinrichtung (3, 4) so verändert wird, daß die Steuerventilanordnung in die erste Druckänderungsstellung und in die zweite Druckänderungsstellung gelangt, und
     -- wobei die Stromwerte

       --- für den Übergang von der Haltestellung in die erste Druckänderungsstellung bei einem hohem Druckpegel,
       --- für den Übergang von der Haltestellung in die erste Druckänderungsstellung bei einem niedrigem Druckpegel, und/oder

--- für den Übergang von der Haltestellung in die zweite Druckänderungsstellung bei einem hohem Druckpegel, und

--- für den Übergang von der Haltestellung in die zweite Druckänderungsstellung bei niedrigem Druckpegel ausgewertet werden, um für den Betrieb des Bremskraftverstärkers eine Kennlinie zu ermitteln, gemäß der die Stromwerte für die obere und untere Grenze der Haltestellung der Steuerventilanordnung bei unterschiedlichen Druckpegeln verändert werden.

2. Elektronisch steuerbarer Bremskraftverstärker nach Anspruch 1, **dadurch gekennzeichnet, daß** die Bestimmung des Stromes für die obere und untere Grenze für die Haltestellung der Steuerventilanordnung bei mehr als zwei Druckpegeln erfolgt.

3. Elektronisch steuerbarer Bremskraftverstärker nach Anspruch 1, **dadurch gekennzeichnet, daß**

- durch die Druckdifferenz zwischen der Druck- und der Unterdruckkammer eine axiale Verschiebung der beweglichen Wand (2) bewirkt wird, bei der ein Gehäuse (1) der Steuerventilanordnung mitgenommen wird.

4. Elektronisch steuerbarer Bremskraftverstärker nach Anspruch 3, **dadurch gekennzeichnet, daß**

- in dem Gehäuse (1) die elektromagnetische Betätigungseinrichtung angeordnet ist, die eine Spule (3) und einen Anker (4) aufweist, wobei der Anker (4) relativ zu dem Gehäuse (1) mit Unterstützung einer ersten Federanordung (5) in axialer Richtung bewegbar ist.

5. Elektronisch steuerbarer Bremskraftverstärker nach Anspruch 3 oder 4, **dadurch gekennzeichnet, daß**

- im Inneren des Gehäuses (1) eine Ventilanordnung (6, 7, 9) ausgebildet ist, die die Unterdruckkammer mit der Druckkammer verbindet oder trennt, wobei durch eine zweite Federanordnung (8) ein Ventilkörper (7) der Ventilanordnung in Richtung auf einen Ventilsitz (9) bzw. ein Ventilelement (6) der Ventilanordnung vorgespannt ist.

6. Elektronisch steuerbarer Bremskraftverstärker nach einem der vorhergehenden Ansprüche, **dadurch gekennzeichnet, daß**

- als für die Druckdifferenz charakteristische Größe der in einem dem Bremskraftverstärker nachgeschalteten Hauptbremszylinder erzeugte Hydraulik- oder Pneumatikdruck ausgewertet wird.

7. Elektronisch steuerbarer Bremskraftverstärker nach einem der vorhergehenden Ansprüche, **dadurch gekennzeichnet, daß**

- die erste Druckänderungsstellung eine Druckaufbaustellung, und
- die zweite Druckänderungsstellung eine Druckabbaustellung ist.

**Claims**

1. An electronically controllable brake booster comprising

- a vacuum chamber and a pressure chamber, which are separated from each other by a movable wall,
- a control valve arrangement (6, 7, 9) which can be actuated by means of an electromagnetic actuation means (3, 4), and by means of which a pressure difference between the pressure chamber and the vacuum chamber can be adjusted, with
- the control valve arrangement (6, 7, 9), as a function of a current (I) flowing through the electromagnetic actuation means (3, 4),

-- assuming a holding position in which the current ranges between a higher value and a lower value without the control valve arrangement leaving the holding position,

-- a first pressure changing position in which the current is higher than the higher value, and

-- a second pressure changing position in which the current is lower than the low value,

**characterised in that**

- a value is sensed in the pressure chamber at two different pressure levels, which is characteristic for the pressure difference between the vacuum chamber and the pressure chamber,
- with the control valve arrangement (6, 7, 9) in each case being in the holding position and, starting from the holding position, the current through the electromagnetic actuation means (3, 4) in each case being modified in such a manner that the control valve arrangement obtains the first pressure changing position and the second pressure changing position, and

-- with the current values

--- for the changeover from the holding position into the first pressure changing position at a high pressure level,
--- for the changeover from the holding position into the first pressure changing position at a low pressure level, and/or
--- for the changeover from the holding position into the second pressure changing position at a high pressure level, and
--- for the changeover from the holding position into the second pressure changing position at a low pressure level being evaluated in order to determine a characteristic for the operation of the brake booster, according to which the current values for the upper and lower limit of the holding position of the control valve arrangement at different pressure levels are changed.

2. The electronically controllable brake booster according to Claim 1, **characterised in that** the determination of the current for the upper and lower limit for the holding position of the control valve arrangement is made at more than two pressure levels.

3. The electronically controllable brake booster according to Claim 1, **characterised in that**

- an axial displacement of the movable wall (2) is effected by the pressure difference between the pressure and the vacuum chamber, in which a housing (1) of the control valve arrangement is driven.

4. The electronically controllable brake booster according to Claim 3, **characterised in that**

- the electromagnetic actuation means which comprises a solenoid (3) and an armature (4) is arranged in the housing (1), with the armature (4) being movable relative to the housing (1) in an axial direction under the assistance of a first spring arrangement (5).

5. The electronically controllable brake booster according to Claim 3 or 4, **characterised in that**

- a valve arrangement (6, 7, 9) is formed in the interior of the housing (1), which connects or separates the vacuum chamber and the pressure chamber, with a valve body (7) of the valve arrangement being biased by a second spring arrangement (8) towards a valve seat (9) or a valve element (6), respectively, of the valve arrangement.

6. The electronically controllable brake booster according to one of the previous claims, **characterised in that**

- the hydraulic or pneumatic pressure generated in a master cylinder downstream of the brake booster is evaluated as the characteristic parameter for the pressure difference.

7. The electronically controllable brake booster according to one of the previous claims, **characterised in that**

- the first pressure changing position is a pressure build-up position, and
- the second pressure changing position is a pressure relief position.

**Revendications**

1. Servofrein pouvant être commandé électroniquement comprenant

- une chambre de dépression et une chambre de pression qui sont séparées l'une de l'autre par une paroi mobile,
- un dispositif de vanne de commande (6, 7, 9), qui peut être actionné au moyen d'un système d'actionnement électromagnétique (3, 4) et par lequel on peut régler une différence de pression entre la chambre de pression et la chambre de dépression, dans lequel
- le dispositif de vanne de commande (6, 7, 9) prend, en fonction d'un courant (I) circulant dans le système d'actionnement électromagnétique (3, 4)

-- une position de maintien, dans laquelle le courant se situe dans une plage comprise entre une valeur supérieure et une valeur inférieure, sans que le dispositif de vanne de commande quitte la position de maintien,

- une première position de modification de pression, dans laquelle le courant est supérieur à la valeur supérieure et
- une deuxième position de modification de pression, dans laquelle le courant est inférieur à la valeur inférieure,

**caractérisé en ce que**

- une grandeur caractéristique de la différence de pression entre la chambre de dépression et la chambre de pression lorsqu'il y a deux niveaux de pression différents dans la chambre de pression est relevée,

-- le dispositif de vanne de commande (6, 7, 9) se trouvant chaque fois dans la position de maintien et partant de la position de maintien le courant circulant respectivement dans le système d'actionnement électromagnétique (3, 4) est modifié de telle façon que le dispositif de vanne de commande arrive dans la première position de modification de pression et dans la deuxième position de modification de pression, et
-- auquel cas les valeurs du courant sont évaluées

--- pour la transition de la position de maintien à la première position de modification de pression dans le cas d'un niveau de pression élevé,
--- pour la transition de la position de maintien à la première position de modification de pression dans le cas d'un faible niveau de pression et / ou
--- pour la transition de la position de maintien à la deuxième position de modification de pression dans le cas d'un niveau de pression élevé et
--- pour la transition de la position de maintien à la deuxième position de modification de pression dans le cas d'un faible niveau de pression, pour déterminer une courbe caractéristique pour le fonctionnement du servofrein, selon laquelle les valeurs du courant pour les limites supérieure et inférieure de la position de maintien sont modifiées pour différents niveaux de pression.

2. Servofrein pouvant être commandé électroniquement selon la revendication 1 **caractérisé en ce que** la détermination du courant pour la limite supérieure et inférieure pour la position de maintien du dispositif de vanne de commande a lieu pour plus de deux niveaux de pression.

3. Servofrein pouvant être commandé électroniquement selon la revendication 1, **caractérisé en ce que**

- la différence de pression entre la chambre de dépression et de pression réalise un déplacement axial de la paroi mobile (2) qui entraîne avec elle un boîtier (1) du dispositif de vanne de commande.

4. Servofrein pouvant être commandé électroniquement selon la revendication 3, **caractérisé en ce que**

- on dispose dans le boîtier (1) le dispositif d'actionnement électromagnétique qui présente une bobine (3) et un induit (4), l'induit (4) étant mobile par rapport au boîtier (1) dans la direction axiale avec l'aide d'un premier dispositif élastique (5).

5. Servofrein pouvant être commandé électroniquement selon la revendication 3 ou 4, **caractérisé en ce que**

- un dispositif de vanne (6, 7, 9) est formé à l'intérieur du boîtier (1) qui met en communication ou isole la chambre de dépression et la chambre de pression, un corps de vanne (7) du dispositif de vanne étant poussé en permanence dans la direction d'un siège de vanne (9), respectivement d'un élément de soupape (6) du dispositif de vanne par un deuxième dispositif élastique (8)

**6.** Servofrein pouvant être commandé électroniquement selon l'une quelconque des revendications précédentes, **caractérisé en ce que**

- on évalue comme grandeur caractéristique pour la différence de pression la pression pneumatique ou hydraulique engendrée dans maître cylindre de frein monté en aval du servofrein.

**7.** Servofrein pouvant être commandé électroniquement selon l'une quelconque des revendications précédentes, **caractérisé en ce que**

- la première position de modification de pression est une position d'augmentation de pression, et
- la deuxième position de modification de pression est une position de diminution de pression.

**Fig. 1**

**Fig. 2**

Kraft

Strom

$I_{AUFBAU}$

$I_{HALTE}$

$I_{ABBAU}$

$x_0$

Ankerweg

**Fig. 3**

w → $x_d$ → Regel-einrichtung → y → Regel-strecke

z

x

-

**Fig. 4**

**Fig. 5**